# EUROPÄISCHE PATENTANMELDUNG

(11) **EP 0 741 008 A2**
(43) Veröffentlichungstag der Anmeldung: **06.11.1996**
(21) Anmeldenummer: 96105870.8
(22) Anmeldetag: 15.04.1996
(51) Int. Cl.: B41C 1/045

(54) **Vorrichtung zum Gravieren von Tiefdruckzylindern**

(30) Priorität: 02.05.1995 CH 274/95
(71) Anmelder: MDC Max Dätwyler Bleienbach AG, CH-3368 Bleienbach (CH)
(72) Erfinder: Flohr, Rainer, 3368 Bleienbach (CH); Schmitt-Lewen, Martin, 4932 Lotzwil (CH)
(74) Vertreter: Patentanwälte Schaad, Balass, Menzl & Partner AG

(57) **Zusammenfassung**

Die Vorrichtung (1) zum Gravieren von Tiefdruckzylindern (5) und ähnlichen Druckformen weist ein Gravierwerkzeug (3) auf, das zusammen mit einem die Oberfläche der zu gravierenden Druckform (5) abtastenden Abtastorgan (4) in einem zur Druckformoberfläche beweglichen Halter (2) gelagert ist. Das Abtastorgan ist ein den Abstand zur Oberfläche der Druckform (5) berührungslos messendes Abstandsmessorgan (4). Der Halter (2) wird aufgrund des vom Abstandsmessorgan (4) gemessenen Abstandes von einem Nachstellelement (9) bezüglich der Druckformoberfläche verstellt zwecks Einhaltung eines vorgegegeben Werkzeugabstandes (W).

## Beschreibung

Die Erfindung betrifft eine Vorrichtung zum Gravieren von Tiefdruckformen nach dem Oberbegriff des Patentanspruchs 1.

Eine solche Vorrichtung ist beispielsweise bekannt aus EP-B-0 262 634, die als Klischograph mit einem Gravierkopf ausgebildet ist, der auf einem Schlitten einen Halter mit einem Gravierstichel und einem Abtastorgan aufweist. Das fest mit dem Halter verbundene Abtastorgan hat eine Spitze, die die Oberfläche des Tiefdruckzylinders mechanisch abtastet und damit einen konstanten Abstand zwischen dem Gravierstichel und der Oberfläche gewährleisten soll. Um unerwünschte Schwingungen und Eigenresonanzen des Halters und des darauf befestigten Gravierstichels zu unterdrücken, wirkt eine mit einer Druckfeder versehene Dämpfungsanordnung auf das mechanische Abtastorgan. Dadurch soll verhindert werden, dass Streifenmuster im Druckbild, die im Fachjargon als "Jalousien" bekannt sind, bei der Gravur des Tiefdruckzylinders entstehen können.

Bei der mechanischen Abtastung des obengenannten Klischographes wird der Gravierstichel mit einer räumlichen Verschiebung nachgeführt, so dass es bei kurzwelligen Unebenheiten zu unterschiedlichen Abständen zwischen dem Gravierstichel und der zu gravierenden Oberfläche des Tiefdruckzylinders kommen kann. Aus diesen Gründen ist es für die Druckereien äusserst wichtig, die Unebenheiten und Unrundheiten des unbearbeiteten Tiefdruckzylinders in einem engen Toleranzbereich zu halten.

Der vorliegenden Erfindung liegt nun die Aufgabe zugrunde, das Gravierwerkzeug auf einen konstanten Abstand zur Oberfläche des zu gravierenden Tiefdruckzylinders oder einer ähnlichen Druckform auch bei kurzwelligen Unebenheiten und grösseren Unrundheiten zu halten.

Diese Aufgabe wird durch eine Vorrichtung mit den Merkmalen des Patentanspruchs 1 gelöst.

Die Erfindung beruht auf der Erkenntnis, dass das Abtastorgan der vorstehend erwähnten, bekannten Graviervorrichtung mit einem gewissen Druck auf die Oberfläche des Tiefdruckzylinders anliegen muss, um die Unebenheiten richtig abtasten zu können und die dadurch entstehenden Eigenschwingungen mittels einer Dämpfungsanordnung wieder unterdrückt werden müssen. Dadurch, dass erfindungsgemäss das Abtastorgan als berührungsloses Abstandsmessorgan vorgesehen ist, können die obigen Schwingungen schon von Anfang an nicht entstehen. Abgesehen davon weist die Spitze des bekannten Abtastorgans eine bestimmte Abtastfläche auf, die im Betrieb durch die Abnutzung allmählich grösser wird, und deshalb periodisch kontrolliert und nachgeschliffen werden muss.

Die Erfindung hat somit den Vorteil, dass die als Abstandsmessung durchgeführte Abtastung keinerlei Abnutzung unterworfen ist und deshalb keiner periodischen Kontrolle bedarf. Ferner können der Ort der Abstandsmessung und die Auflagestelle des Gravierstichels sehr nahe zueinander liegen oder sogar zusammenfallen. Dadurch haben auch kurzwellige Unebenheiten oder Unrundheiten des Tiefdruckzylinders keinen Einfluss mehr auf das Konstanthalten des Abstandes zwischen dem Gravierwerkzeug und der zu gravierenden Oberfläche. Ausserdem gewährleistet die berührungslose Abtastung eine äusserst schnelle und präzise Messung, so dass eine genaue Anpassung des Abstandes in örtlicher und in zeitlicher Hinsicht gegeben ist. Das bedeutet, dass zeitliche Verzögerungen, die üblicherweise bei der vorgenannten bekannten mechanischen Abtastung auftreten, völlig unterbleiben.

Weitere Vorteile der Erfindung ergeben sich aus den abhängigen Ansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine schematische Darstellung einer Graviermaschine mit einem berührungslosen Abstandsmessorgan,
- Fig. 2: eine Frontansicht in Richtung des Pfeiles A in Figur 1 auf den Gravierkopf,
- Fig. 3: eine vergrösserte Darstellung der Figur 1 zur Verdeutlichung der Betriebsweise, und
- Fig. 4: ein Schaltschema der Steuerung des Werkzeugabstandes des Gravierstichels.

In den Figuren sind für dieselben Elemente jeweils dieselben Bezugszeichen verwendet und gelten erstmalige Erklärungen der Elemente für alle Figuren, wenn nicht ausdrücklich anders angegeben.

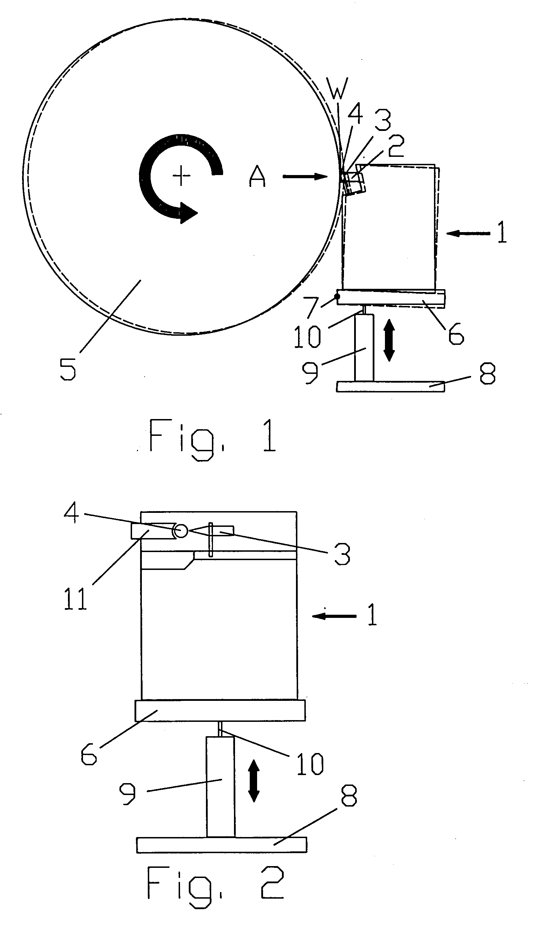

In Figur 1 ist eine Graviermaschine 1 mit einem Halter oder Gravierkopf 2 dargestellt, der einen Gravierstichel 3 und ein Abstandmessorgan 4 aufweist. Der Gravierstichel 3 dient in bekannter Weise dazu, Rasternäpfchen in der Oberfläche eines Tiefdruckzylinders 5 zu erzeugen. Das Steuersignal für die Auf- und Abbewegung des Gravierstichels 3 wird dabei von einem durch Abtasten einer Vorlage gewonnenen Bildsignal abgeleitet oder von einem digitalen Bildverarbeitungssystem abgegeben. Weitere Einzelheiten zur Funktion des Klischographes 1 sind auf dem einschlägigen Fachgebiet bekannt und werden daher hier nicht weiter erwähnt. Der Gravierkopf 2 ist auf einer Hebebühne 6 befestigt, die um eine Drehachse 7 drehbar gelagert und von einem sich gegen das Maschinengestell 8 abstützenden als piezoelektrischen Antrieb ausgebildeten Nachstellelement 9 durch eine Kippbewegung auf- und abbewegt wird. Die Drehachse 7 ist dabei ortsfest zum Maschinengestell 8 angeordnet, was der Einfachheit halber hier nicht weiter dargestellt ist. Diese Kippbewegung der Hebebühne 6 wird unmittelbar auf den Gravierkopf 2 übertragen und vom darauf befestigten Gravierstichel 3 mitgemacht. Je näher der Stützpunkt des Stössels 10 des Nachstellelementes oder piezoelektrischen Antriebes 9 zur Drehachse 7 angeordnet ist, je grösser wird die Kippbewegung und umgekehrt. Damit lässt sich das Übersetzungsverhältnis zwischen der Auslenkung des Stössels 10 und die Nachführung des Werkzeugabstandes W zwischen dem Gravierstichel 3 und der Oberfläche des Tiefdruckzylinders 2 entsprechend den jeweiligen Anforderungen einstellen.

In Figur 2 ist der Gravierkopf 2 in Frontansicht in Richtung des Pfeiles A der Figur 1 zu sehen. In diesem Beispiel ist das Abstandsmessorgan 4 als kapazitiver Sensor unmittelbar neben dem Gravierstichel 3 vorgesehen, so dass die Abstandsmessstelle und die Gravierstelle für die Rasternäpfchen nahe beieinander liegen. Durch geeignete Wahl des Messortes liegt dieser auf einer Rasterlinie, welche in der Bewegungsrichtung des Gravierstichels 3 liegt. Dadurch kann durch eine passende elektronische Verzögerung eine präzise Korrektur des Werkzeugabstandes W aufgrund des gemessenen Abstandes vorgenommen werden. Diese Verzögerung kann aus der Distanz zwischen dem Messort und der Bearbeitungsstelle des Gravierstichels 3 und aus der Bewegungsgeschwindigkeit des Gravierstichels 3 längs der Rasterlinie abgeleitet werden. Neben dem Abstandsmessorgan 4 ist eine Luftblasdüse 11 angeordnet, die auf der Oberfläche des Tiefdruckzylinders 2 angesammelten Staub und anhaftende Metallspäne von der gravierten Zylinderoberfläche wegbläst. Unterhalb des Gravierkopfes 2 kann zusätzlich eine nichtdargestellte Absaugeinrichtung vorgesehen sein, um die Verunreinigungen in der Form von Staub, Metallspänen und dergleichen wirksam entfernen zu können.

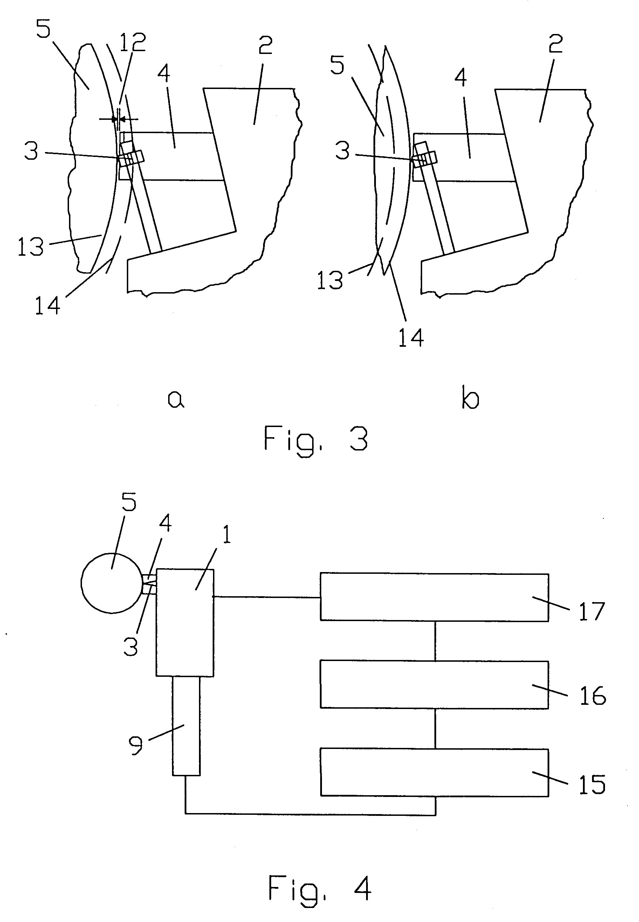

In Figur 3a ist ein Ausschnitt des Gravierkopfes 2 der Figur 1 vergrössert dargestellt. Deutlich ersichtlich ist der enge Spalt 12 zwischen der Zylinderoberfläche 13 des Tiefdruckzylinders 5 mit einer genau kreiszylindrischen Form und der Messfläche des kapazitiven Sensors 4. Die Luftblasdüse 11 wird mit Pressluft beaufschlagt, um die Verunreinigungen aus dem Spalt 12 in der Grössenordnung von 250 µm wegzublasen. Gestrichelt ist eine Unrundheit 14 der Zylinders 5 als Abweichung der Zylinderoberfläche 13 von der idealen kreiszylindrischen Form angedeutet. Die Unrundheit 14 ist in Figur 3b ausgezogen gezeichnet und bewirkt eine Kippbewegung der Hebebühne 6 um die Drehachse 7, d.h. eine Anpassung des Werkzeugabstandes W des Gravierstichels 3. Die Luftblasdüse kann auch als Ringdüse (hier nicht dargestellt) ausgebildet sein, die um den kapazitiven Abstandssensor 4 herumverläuft und eine Art Schutzvorhang aus Pressluft darum bildet und so stets eine saubere Messfläche auf der Zylinderoberfläche 13 freihält.

In Figur 4 ist die elektronische Steuerung zur Nachführung des Werkzeugabstandes des Gravierstichels 3 aufgrund des vom Abstandsmessorgan 4 gemessenen Abstandes schematisch gezeigt. Anliegend am Tiefdruckzylinder 5 ist der Gravierkopf 2 mit dem piezoelektrischen Antrieb 9 dargestellt, der mit einer Antriebssteuerung 15 elektrisch verbunden ist. Diese Antriebssteuerung 15 ist über eine Regelung 16 mit einer elektronischen Schaltung 17 für die Abstandsmessung verbunden. In der Schaltung 17 wird das gemessene Abstandssignal als Istwert W_{Ist} mit einem vorgegebenen Sollwert W_{Soll}, welcher den idealen Werkzeugabstand darstellt, verglichen und als Regelsignal an die Regelung 16 weitergegeben. In der Regelung wird dieses Regelsignal durch eine passende Zeitverzögerung und Signalverstärkung als Steuersignal für die Antriebssteuerung 15 aufbereitet. Damit bildet diese Schaltung einen einfachen Regelkreis, um den Werkzeugabstand W des Gravierstichels 3 in bezug auf die Zylinderoberfläche 13 konstant zu halten.

Das Abstandsmessorgan 4 ist im obigen Beispiel als kapazitiver Abstandssensor ausgebildet. Mit Vorteil kann dieses jedoch auch ein induktiver oder optischer Abstandssensor sein. Auch ein pneumatischer Abstandssensor, wie beispielsweise ein aus der Blechbearbeitung mit Lasern bekannter Staudrucksensor, kann dazu verwendet werden, wobei in diesem Fall die Luftblasdüse 11 entfällt, da die Reinigungsfunktion gleichzeitig von einem solchen Sensor übernommen wird. Als Nachstellelement 9 kann anstatt eines piezoelektrischen Antriebes auch ein elektromagnetischer Antrieb in Form eines elektrostriktiven oder magnetostriktiven Stellgliedes verwendet werden, wie aus der Automobiltechnik in Zusammenhang mit sogenannten ABS-Systemen bekannt. Ein präziser Servomotor oder ein hydraulischer Antrieb kann ebenfalls anstelle des piezoelektrischen Antriebes eingesetzt werden. Das Nachstellelement 9 in der Form eines der obengenannten Antriebe ist normalerweise linearbeweglich, da die Hebebühne 6 nur eine geringe Kippbewegung auszuführen braucht.

Der Antrieb des Gravierstichels 3 kann sowohl auf herkömmliche Art wie auch mittels einer piezoelektrischen Antriebseinheit, die auf geeignete Weise angesteuert wird, erfolgen.

## Patentansprüche

1. Vorrichtung zum Gravieren von Tiefdruckformen (5), insbesondere Tiefdruckzylindern, mit wenigstens einem Gravierwerkzeug (3), das zusammen mit einem die Oberfläche (13) der zu gravierenden Druckform abtastenden Abtastorgan (4) in einem zur Druckformoberfläche (13) beweglichen Halter (2) gelagert ist, dadurch gekennzeichnet, dass das Abtastorgan ein den Abstand zur Oberfläche (13) der Druckform (5, 5) berührungslos messendes Abstandsmessorgan (4) ist und der Halter (2) aufgrund des vom Abstandsmessorgan (4) gemessenen Abstandes von einem Nachstellelement (9) bezüglich der Oberfläche (13) der Druckform (5) verstellbar ist zwecks Einhaltung eines vorgegegeben Werkzeugabstandes (W).

2. Vorrichtung nach Anspruch 1, dadurch gekennzeichnet, dass das Abstandsmessorgan (4) ein kapazitives Messorgan ist.

3. Vorrichtung nach Anspruch 1, dadurch gekennzeichnet, dass das Abstandsmessorgan (4) ein induktives Messorgan ist.

4. Vorrichtung nach Anspruch 1, dadurch gekennzeichnet, dass das Abstandsmessorgan (4) ein optisches Messorgan ist.

5. Vorrichtung nach Anspruch 1, dadurch gekennzeichnet, dass das Abstandsmessorgan (4) ein pneumatisches Messorgan ist.

6. Vorrichtung nach Anspruch 1, dadurch gekennzeichnet, dass der Halter (2) um eine vom Gravierwerkzeug (3) beabstandete Drehachse (7) drehbar gelagert ist.

7. Vorrichtung nach Anspruch 6, dadurch gekennzeichnet, dass der Halter (2) mittels eines Nachstellelementes (9), das linearbeweglich ist, verdrehbar ist.

8. Vorrichtung nach Anspruch 7, dadurch gekennzeichnet, dass das Nachstellelement ein piezoelektrischer Antrieb (9) ist.

9. Vorrichtung nach Anspruch 7, dadurch gekennzeichnet, dass das Nachstellelement (9) ein elektromagnetischer, insbesondere ein elektrostriktiver oder ein magnetostriktiver Antrieb ist.

10. Vorrichtung nach Anspruch 7, dadurch gekennzeichnet, dass das Nachstellelement (9) ein Servomotor ist.

11. Vorrichtung nach Anspruch 1, dadurch gekennzeichnet, dass dem Abstandsmessorgan (4) eine Luftblasdüse (11) zugeordnet ist.

12. Vorrichtung nach Anspruch 11, dadurch gekennzeichnet, dass die Luftblasdüse (11) das Abstandsmessorgan (4) ringförmig umschliesst.
